# FASCICULE DE BREVET EUROPEEN

(11) **EP 1 731 277 B1**
(45) Date de publication et mention de la délivrance du brevet: **02.11.2011**
(21) Numéro de dépôt: 05012515.2
(22) Date de dépôt: 10.06.2005
(51) Int. Cl.: B26D 7/26, B31F 1/07, B31B 1/14

(54) **Station de transformation pour une machine de production d'emballages**
Verarbeitungsstation für eine Maschine zum Herstellen von Verpackungen
Processing station for a machine for the manufacture of packaging

(43) Date de publication de la demande: 13.12.2006
(73) Titulaire: BOBST S.A., 1001 Lausanne (CH)
(72) Inventeur: Bapst, Sylvain, 1638 Morlon (CH); Clement, Philippe, 1305 Penthalaz (CH)
(74) Mandataire: Poirier, Jean-Michel Serge

(56) Documents cités:
- EP-A- 1 331 054
- EP-A- 1 537 920
- FR-A- 2 819 744

## Description

La présente invention a pour objet une station de transformation pour une machine de production d'emballages, machine destinée à la fabrication de boîtes pliantes à partir d'une matière en bande ou en feuilles.

De telles machines de production d'emballages comprennent plusieurs stations de transformation successives, par exemple, une station d'alimentation, suivie d'une ou plusieurs stations d'impression, éventuellement d'une station de refoulage, d'une station de gaufrage, d'une station de découpage rotatif, d'une station d'éjection des déchets et enfin d'une station de réception des découpes de boîtes pliantes. Ce genre de machines ayant une conception modulaire, il est possible que, dans une configuration préférée, une machine ne comprenne, en plus de la station d'alimentation, des stations d'impression et de réception des découpes, qu'une station de gaufrage suivie par une station de découpage rotatif et par une station d'éjection des déchets.

Les bandes ou feuilles, par exemple des bandes ou feuilles de carton, peuvent généralement contenir dans leur largeur plusieurs poses ou découpes de boîtes identiques qui chacune représente la forme et la surface développée de l'emballage fabriqué. Le nombre de poses que l'on peut ainsi disposer côte à côte dépend bien sûr de la largeur du support travaillé, mais aussi du format maximum admis par la machine et de la taille des découpes des boîtes. En général, les poses ou découpes de boîtes sont disposées de part et d'autre de l'axe médian théorique des bandes ou feuilles travaillées par la machine. Les différentes stations de la machine sont toutes équipées d'outils spécifiques, de préférence des outils rotatifs d'impression, de découpage, de gaufrage et de refoulage ainsi que d'éjection des déchets résultants des opérations de découpage, dont les dimensions correspondent à la largeur des bandes ou feuilles travaillées. Pour ce qui est des outils rotatifs d'impression, le changement de la largeur des bandes ne pose pas de problèmes particuliers car il suffit de monter un cliché adéquat sur le cylindre porte cliché. Par contre, pour ce qui est des outils rotatifs de découpage, de gaufrage, de refoulage et d'éjection, qui sont montés dans des cassettes dont un exemple est décrit dans le brevet FR 2 819 744 B1 cela pose un problème lié à la construction de ces cassettes. Dans la pratique, ces cassettes peuvent provenir de plusieurs fabricants choisis par le producteur d'emballages en fonction, par exemple d'un coût avantageux ou de performances d'usure plus avantageuses. A cet effet, et pour adapter les cassettes de fabricants différents, on emploie un adaptateur de cassette permettant l'insertion de cassettes de provenance quelconque, tel que celui décrit dans la demande de brevet EP 1 331 054 A3. Actuellement, pour chaque largeur de bandes ou feuilles, on doit utiliser des cassettes porte-outils de largeur correspondante. Les dimensions en largeur d'une bande de carton, par exemple, peuvent varier dans une fourchette comprise entre 325 à 850 mm. En général les largeurs les plus courantes utilisées par les fabricants de boîtes pliantes sont 550, 670, 820 et 850 mm, largeurs définies par les dimensions en largeur des découpes de boîtes à travailler. Le fabricant d'emballages confronté à l'utilisation de plusieurs largeurs de bandes de carton devra choisir une solution, très onéreuse et nécessitant l'utilisation d'une place importante dans l'usine de cartonnage, qui consiste à utiliser plusieurs machines de différentes largeurs de passage de bande.

A l'heure actuelle et dans la connaissance de l'état de la technique dans ce domaine, il n'existe aucune autre solution permettant de palier les inconvénients se présentant obligatoirement lors de l'utilisation de largeurs de bandes variables.

Le but poursuivi par la présente invention consiste à proposer aux producteurs d'emballages une station de transformation pour une seule machine de production d'emballages, de façon à autoriser le travail de différentes largeurs de bande ou de feuilles.

A cet effet, la présente invention est conforme à ce qu'énonce la revendication 1.

L'invention sera mieux comprise à l'étude d'un mode de réalisation pris à titre nullement limitatif et illustré par les figures annexées dans lesquelles:
- La figure 1 représente une vue schématique de profil d'une machine de production d'emballages,
- la figure 2 représente une vue schématique en perspective, d'une station de découpage équipée d'une cassette porte-outils,
- la figure 3 représente une vue schématique des organes d'un dispositif de montage pour une cassette porte-outils dans deux stations consécutives.
- la figure 4 représente une vue schématique en perspective des organes d'un dispositif de fixation d'un support de cassette porte-outils et d'un dispositif de verrouillage d'une cassette porte-outils,
- la figure 5 représente une vue de profil des organes de la partie gauche d'un dispositif de fixation d'un support de cassette porte-outils, et
- la figure 6 représente une vue de profil des organes de la partie gauche d'un dispositif de verrouillage d'une cassette porte-outils.

Dans le but de définir quelques termes utilisés couramment dans la description qui va suivre pour décrire l'orientation ou la localisation de certaines parties d'objets, on notera que les adjectifs "longitudinal" et "transversal" se réfèrent toujours à l'axe principal de défilement de la matière en bande ou en feuilles dans la machine, et que les termes "amont" et "aval" indiquent respectivement le côté le plus proche de l'entrée de la machine et celui le plus proche de la sortie.

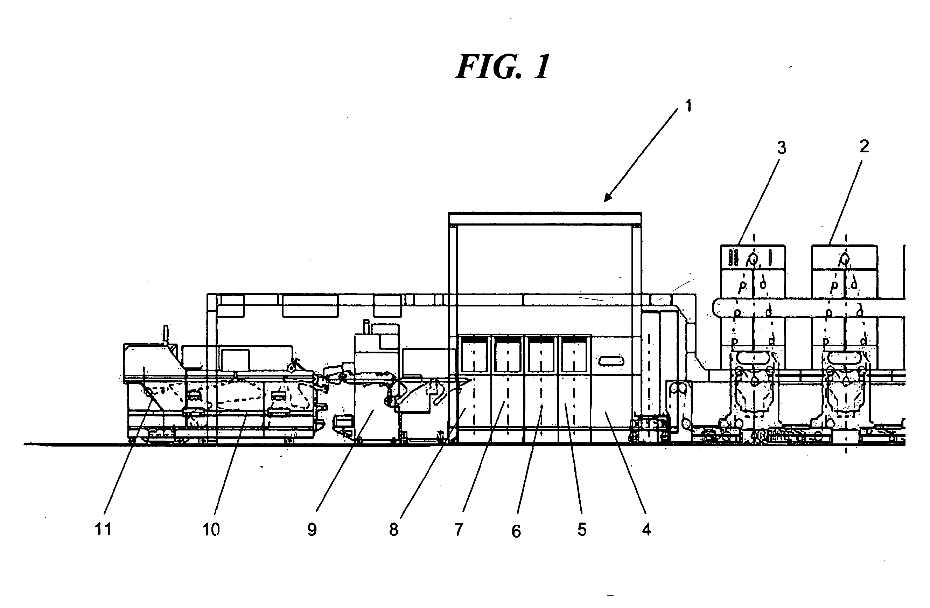

La figure 1 représente une vue schématique de profil d'une machine de production d'emballages 1 dans laquelle la partie amont située avant les groupes imprimeurs 2 et 3 n'a pas été prise en compte pour des raisons de simplification de la présente description. Dans le présent exemple, nous nous bornerons à ne décrire qu'une machine travaillant une matière en bande, étant donné que, pour ce qui est d'une machine travaillant une matière en feuilles, seuls des moyens spécifiques, bien connus, de transport des feuilles devront être mis en oeuvre. Dans la machine de production d'emballages 1, la matière en bande, imprimée, sortant des groupes imprimeurs 2 et 3 est amenée dans les différentes stations de gaufrage 5, de refoulage 6, de découpage 7 et d'éjection des déchets 8 après avoir passé dans une station d'introduction 4. Les découpes de boîtes résultantes sont ensuite séparées les une des autres dans une station de séparation à courroies 9 pour ensuite être mises en nappes dans la station 10 avant d'être empilées dans la station d'empilage 11. La partie de la machine de fabrication d'emballages, tels que des boîtes pliantes, qui est concernée par la présente invention se trouve au niveau des stations 5 à 8 qui utilisent essentiellement des cassettes porte-outils.

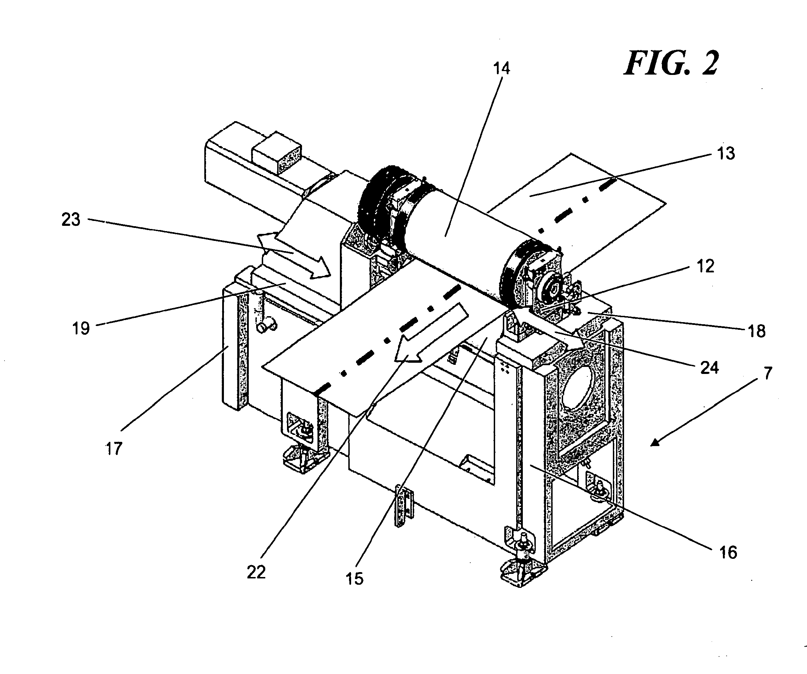

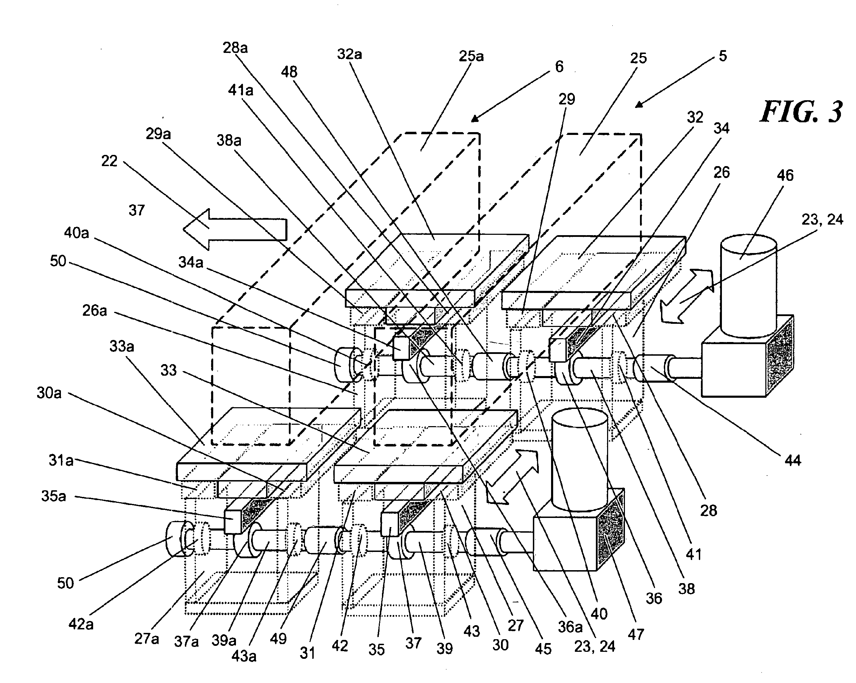

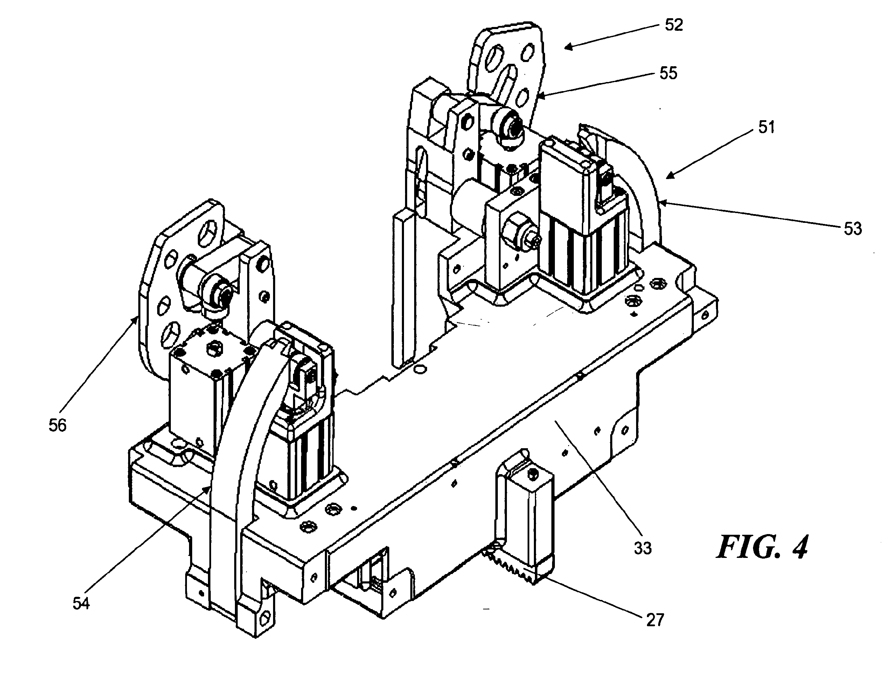

La figure 2 représente une vue schématique en perspective, d'une station de découpage 7 équipée d'une cassette porte-outils 12. La matière en bande 13, défilant d'amont en aval dans le sens indiqué par la flèche 22, est découpée au moyen d'un outil de découpage rotatif supérieur 14 agissant conjointement avec un contre-outil rotatif inférieur 15. Il est à remarquer que l'utilisation de telles cassettes autorise une très grande précision de positionnement radiale de l'outil rotatif supérieur 14 par rapport au contre-outil rotatif inférieur 15. La station de découpage 7 est constituée des bâtis latéraux 16 et 17 sur lesquels sont agencées des bases d'appui, appelées ici supports cassettes 18, 19 (voir figure 3), pour la cassette porte-outils 12 ainsi que des dispositifs de fixation en position 20 des support cassettes 18, 19 et de verrouillage 21 de la cassette porte-outils 12. Les dispositifs de fixation en position 20 des support cassettes 18, 19 et de verrouillage 21 de la cassette porte-outils 12 sont solidaires des supports cassettes 18, 19 et seront décrits plus en détail en se référant aux figures 4, 5 et 6. Les supports cassettes 18 et 19 sont déplaçables, en fonction de la dimension de la cassette 12, dans le sens indiqué par les doubles flèches 23 et 24. Les stations de gaufrage 5, de refoulage 6 et d'éjection des déchets 8 sont de construction similaire à celle de la station de découpage 7, sommairement décrite ci-avant, la seule différence résidant dans les outils équipant ces stations de stations de gaufrage 5, de refoulage 6 et d'éjection des déchets 8.

La figure 3 représente une vue schématique des organes d'un dispositif de montage d'une cassette porte-outils 25, respectivement 25a dans deux stations consécutives, par exemple, la station de gaufrage 5 et la station de refoulage 6. Dans cette description, seuls les organes du dispositif de montage de la cassette porte-outils de la station de gaufrage 5 seront pris en compte, les organes du dispositif de montage de la station de refoulage 6 étant identiques, ils porteront les mêmes signes de référence associés à la lettre "a". Les organes des dispositifs de montage des stations de découpage 7 et d'éjection des déchets 8 sont eux aussi identiques à ceux des stations de gaufrage 5 et de refoulage 6 et par conséquent ils ne seront pas décrits spécifiquement.

Pour la clarté du dessin, les dispositifs de fixation en position 20 des support cassettes 18, 19 et de verrouillage 21 de la cassette porte-outils 12, solidaires des supports cassettes 18, 19 ne seront pas décrits sur cette figure et comme mentionné plus haut dans le présent texte, ils seront décrits plus en détail en se référant aux figures 4, 5 et 6.

La station de gaufrage 5 comprend deux bâtis 26 et 27 équipés, chacun à leur partie supérieure de deux glissières 28, 29 respectivement 30 et 31. Les glissières 28 et 29 servent d'organes de guidage pour le support cassette 32 alors que les glissières 30 et 31 servent d'organes de guidage pour le support cassette 33. La partie inférieure de chacun des supports cassette 32 et 33 est équipée d'une crémaillère 34, respectivement 35. Chaque crémaillère 34 et 35 engrène avec un pignon 36, respectivement 37 montés sur un arbre 38, 39. Chaque arbre 38, 39 est soutenu par des paliers 40,41, 42 et 43 agencés respectivement dans les bâtis 26 et 27. Les arbres 38, 39 sont entraînés, par l'intermédiaire d'un accouplement 44, 45, par un moteur réducteur 46,47. Le déplacement des supports cassette 32 et 33 s'effectue en direction de l'axe médian de la matière en bande, cela d'une valeur égale pour chaque support cassette 32 et 33 en fonction de la dimension des cassettes porte-outils devant être utilisées. Le déplacement en opposition des supports cassette 32 et 33 est obtenu en modifiant le sens de rotation des moteurs réducteurs 46, 47. La cassette porte-outils 25a ayant des dimensions identiques à celles de la cassette porte-outils 25, il conviendra d'appliquer, aux supports cassette 32a et 33a, un déplacement identique à celui des supports cassette 32 et 33. A cet effet, l'arbre 39a portant le pignon 37a, engrenant avec la crémaillère 35a, sera relié à l'arbre 39 par l'intermédiaire d'un autre accouplement 48, 49. Un codeur, tel qu'un générateur d'impulsions 50, sera monté à l'extrémité des arbres 38a et 39a ou, dans le cas de l'utilisation d'un nombre plus important de stations, à l'extrémité des arbres respectifs de la dernière station utilisée. Il est à remarquer que l'emplacement du générateur d'impulsions 50 pourrait sans autre être situé au niveau du moteur réducteur 46, 47. Les informations transmises par les générateurs d'impulsions seront mémorisées de manière à ce que les réglages pour une dimension donnée de cassette puissent être reproduits lors de travaux répétitifs.

La figure 4 représente une vue schématique en perspective des organes d'un dispositif de fixation 51 d'un support de cassette porte-outils 33 et d'un dispositif de verrouillage 52 d'une cassette porte-outils. Sur cette figure, seuls les organes du dispositif de fixation 51 d'un support de cassette porte-outils 33 et d'un dispositif de verrouillage 52 d'une cassette porte-outils (non représentée) solidaires du support cassette 33 ont étés représentés, cela pour la simple raison que les organes du dispositif de fixation d'un support de cassette porte-outils et d'un dispositif de verrouillage d'une cassette porte-outils solidaires du support cassette 32 sont identiques. Un simple montage en opposition représentant la différence par rapport à la présente figure 4. Le dispositif de fixation 51 du support de cassette porte-outils 33 comporte deux organes de serrage 53 et 54 disposés symétriquement par rapport à l'axe médian du support de cassette porte-outils 33. Il en va de même pour ce qui est des deux organes de verrouillage 55 et 56 du dispositif de verrouillage 52 d'une cassette porte-outils. La crémaillère 27 du support cassette 33 est visible à la partie inférieure de ce support cassette 33.

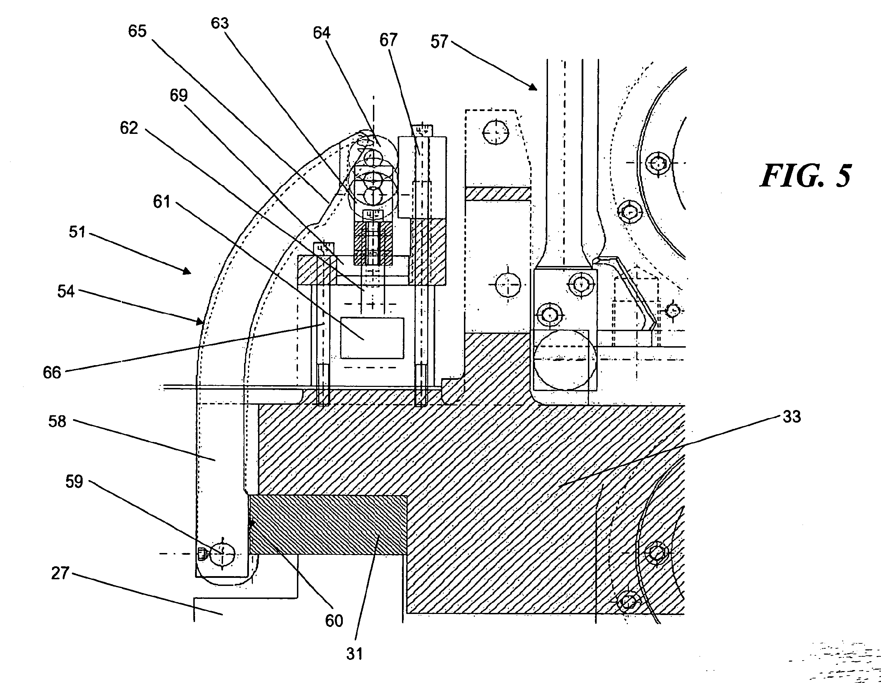

La figure 5 représente une vue de profil des organes de la partie gauche du dispositif de fixation 51 du support de cassette 33. Les organes de la partie droite du dispositif de fixation 51 du support de cassette 33 sont identiques et ne seront donc pas décrits. Le support cassette 33, coulissant sur la glissière 31 montée sur la partie supérieure du bâti 27, ayant été déplacé transversalement par rapport au sens de défilement de la bande de carton 13 (voir fig.2) en fonction de la largeur de la cassette 57 (partiellement représentée) au moyen des organes du dispositif de montage de cassette décrit en relation avec la figure 3, devra être bloqué en position à l'aide du dispositif de fixation 51. A cet effet, le dispositif de fixation 51, agencé sensiblement sur la partie arrière du support cassette 33 (voir fig. 4), comprend un organe de serrage 54 constitué par un levier 58 articulé autour d'un axe 59 agencé dans un bossage solidaire du support cassette 33. Le levier 58 présente, à sa partie inférieure une surface plate 60 qui, lors du blocage en position du support cassette 33, appliquera une force de serrage contre la glissière 31. Cette force de serrage étant obtenue par le truchement d'un vérin pneumatique 61 dont l'axe de sortie 62 est équipé d'un sabot 63 sur lequel est monté un galet 64 agissant contre la partie supérieure inclinée 65 du levier 58. Le galet 64 fixé sur le sabot 63 est guidé par un coulisseau 68 monté sur l'étrier 69 supportant le vérin pneumatique 61 de façon à éviter une contrainte non désirée sur l'axe de sortie 62 du vérin pneumatique 61. Le vérin pneumatique 61 est fixé sur le support cassette 33 à l'aide des vis 66 et 67.

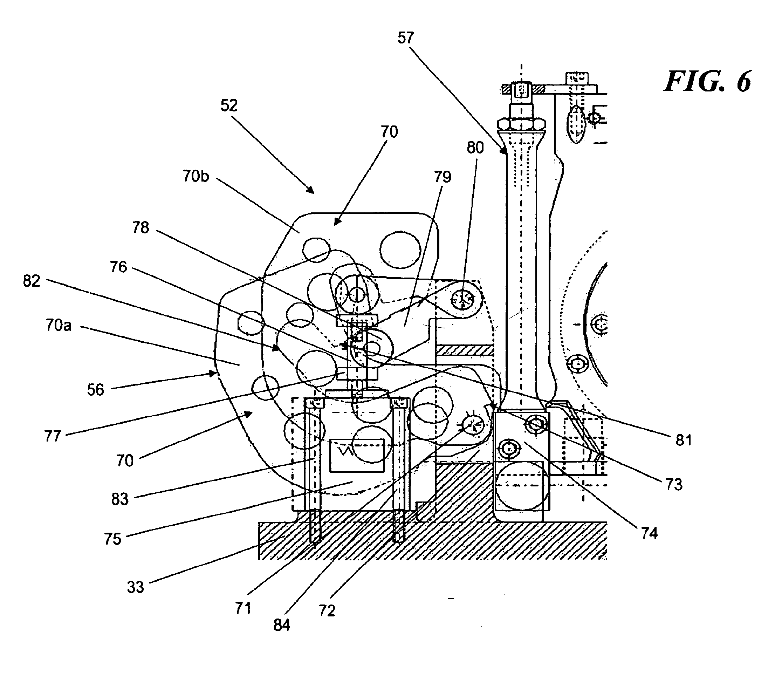

La figure 6 représente une vue de profil des organes de la partie gauche d'un dispositif de verrouillage 52 d'une cassette porte-outils 57. Les organes de la partie droite du dispositif de verrouillage 52 d'une cassette porte-outils 57 sont identiques et ne seront donc pas décrits. Le support cassette 33, ayant été déplacé transversalement par rapport au sens de défilement de la bande de carton 13 (voir fig.2) en fonction de la largeur de la cassette 57 (partiellement représentée) au moyen des organes du dispositif de montage de cassette décrit en relation avec la figure 3, aura été bloqué en position à l'aide du dispositif de fixation 51. Il conviendra alors de verrouiller la cassette 57 au moyen du dispositif de verrouillage 52. A cet effet, le dispositif de verrouillage 52, agencé sensiblement sur la partie avant du support cassette 33 (voir fig. 4), comprend un organe de verrouillage 56 constitué par un levier 70 articulé autour d'un axe 71 agencé dans un bossage 72 solidaire du support cassette 33. Le levier 70 présente, à sa partie inférieure une surface d'appui 73 qui viendra verrouiller la cassette 57 en pressant la partie supérieure du talon 74 de la cassette 57 sous l'effet du vérin pneumatique 75. Sur cette figure, le levier 70 est représenté, d'une part dans sa position ouverte 70a et d'autre part dans sa position de verrouillage 70b. L'axe de sortie 76 du cylindre pneumatique 75 est équipé d'un sabot 77 qui agit contre un galet 78 monté à l'une des extrémités d'un levier pivotant 79 articulé autour d'un pivot 80 agencé dans la partie supérieure du bossage 72 du support cassette 33. En position ouverte 70a du levier 70, le galet 78 sera en contact avec un plan incliné 81 du levier 70. Lors de l'opération de verrouillage, le vérin pneumatique 75 fera pivoter le levier pivotant 79 de façon à ce que le galet 78 roule le long du plan incliné 81 et vienne s'engager dans une encoche de verrouillage 82 agencée dans le levier 70, cela pour assurer un verrouillage sans jeu de la cassette 57. La géométrie du levier 70 et du levier pivotant est choisie de façon à multiplier les forces appliquées sur la partie supérieure du talon 74 de la cassette 57. Le vérin pneumatique 75 est fixé sur le support cassette 33 à l'aide des vis 83 et 84.

Les mêmes organes que ceux du dispositif de verrouillage 52 pourront être employés lors de l'utilisation d'un adaptateur de cassette tel que celui décrit dans la demande de brevet européen citée dans la partie introductive de la présente demande car cet adaptateur possède un talon identique au talon 74 de la cassette 57.

L'avantage principal procuré par un tel dispositif pour le montage de cassettes porte-outils dans les stations d'une machine de production d'emballages réside essentiellement dans le fait de la possibilité de pouvoir travailler, avec une seule et même machine, des largeurs de bandes ou feuilles différentes en autorisant l'emploi de cassettes porte-outils adaptées aux largeurs de bandes ou feuilles définies par l'utilisateur.

De nombreuses améliorations peuvent être apportées au dispositif de cette invention dans le cadre des revendications.

## Revendications

1. Station de transformation (5, 6, 7, 8), pour une machine de production d'emballages, comprenant des bâtis latéraux (16,17, 26, 2ba, 27, 27a) supportant des glissières (28, 28a, 29, 29a, 30, 30a, 31, 31 a), **caractérisée en ce que** des cassettes porte-outils (12, 25, 25a, 57) sont destinées à être montées entre les bâtis latéraux (16, 17, 26, 26a, 27, 27a), et **en ce que** des organes coulissent sur les glissières (28, 28a, 29, 29a, 30, 30a. 31, 31a), pour le montage de cassettes porte-outils, comportant des supports cassettes (32, 32a, 33, 33a) déplaçables en opposition en fonction des dimensions des cassettes porte-outils (12, 25, 25a, 57), lesdits supports cassettes (32, 32a, 33, 33a) étant équipés de dispositifs de fixation (51) en position des supports cassettes (32, 32a, 33, 33a) et de dispositifs de verrouillage (52) des cassettes porte-outils (12, 25, 25a, 57).

2. Station de transformation (5, 6, 7, 8) selon la revendication 1, **caractérisée en ce que** les glissières (28, 28a, 29, 29a, 30, 30a, 31, 31a) sont agencées à la partie supérieure de chacun des bâtis latéraux (16, 17, 26, 26a, 27, 27a).

3. Station de transformation (5, 6, 7, 8) selon la revendication 1, **caractérisée en ce que** les supports cassettes (32, 32a, 33, 33a) comportent, chacun à leur partie inférieure, des crémaillères (34, 34a, 35, 35a) engrenant avec des pignons (3b, 36a, 37, 37a) montés sur des arbres (38, 38a, 39, 39a) entraînés par des moteurs réducteurs (46, 47).

4. Station de transformation (5, 6, 7, 8) selon la revendication 3, **caractérisée en ce que** les arbres (38, 38a, 39, 39a) sont supportés dans des paliers (40, 41, 42, 43, respectivement 40a, 41a, 42a, 43a) agencés dans les parois des bâtis latéraux (16, 17, 26, 26a, 27, 27a).

5. Station de transformation (5, 6, 7, 8) selon la revendication 4, **caractérisé en ce que** les arbres (38, 38a, 39, 39a) sont équipés à leur extrémité d'un générateur d'impulsion (50).

6. Station de transformation (5, 6, 7, 8) selon la revendication 1, **caractérisée en ce que** les dispositifs de fixation (51) en position des supports cassette (32, 32a, 33, 33a) comprennent deux organes de serrage (53, 54) constitués par des leviers (58) articulés autour d'axes (59) agencés dans des bossages solidaires des supports cassette (32, 32a, 33, 33a).

7. Station de transformation (5, 6, 7, 8) selon la revendication 6, **caractérisée en ce que** les leviers (58) comprennent, à leur partie inférieure, une surface plate 60 destinée à appliquer une force de serrage contre les glissières (28, 28a, 29, 29a 30, 30a, 31, 31a) sous l'action de vérins pneumatiques (61) fixés sur chaque support cassette (32, 32a, 33, 33a).

8. Station de transformation (5, 6, 7, 8) selon la revendication 1, **caractérisée en ce que** les dispositifs de verrouillage (52) des cassettes porte-outils (12, 25, 25a, 57) comprennent un organe de verrouillage (56) constitué par des leviers (70) articulés autour d'axes (71) agencés dans des bossages (72) solidaires des supports cassette (32, 32a, 33, 33a).

9. Station de transformation (5, 6, 7, 8) selon la revendication 8, **caractérisée en ce que** les leviers (70) comprennent, à leur partie inférieure, une surface d'appui (73) pour verrouiller les cassettes (12, 25, 25a, 57) en pressant la partie supérieure des talons (74) desdites cassettes (12, 25, 25a, 57) sous l'effet de vérins pneumatiques (75) fixés sur chaque support cassette (32, 32a, 33, 33a).

10. Station de transformation (5, 6, 7, 8) selon la revendication 9, **caractérisée en ce que** les leviers (70) comportent chacun une encoche de verrouillage (82) dans laquelle viennent s'engager des galets (78) montés sur des leviers pivotants (79) articulés autour de pivots (80) agencés dans la partie supérieure des bossages (72) des supports cassette (32, 32a, 33, 33a).

## Claims

1. Transformation station (5, 6, 7, 8), for a packaging production machine, comprising side frames (16, 17, 26, 26a, 27, 27a) supporting slides (28, 28a, 29, 29a, 30, 30a, 31, 31 a), **characterized in that** tool-carrier cassettes (12, 25, 25a, 57), comprising rotary tools mounted in bearing blocks, are designed to be mounted between the side frames (16, 17, 26, 26a, 27, 27a) and **in that** members slide on the slides (28, 28a, 29, 29a, 30, 30a, 31, 31 a), for the mounting of tool-carrier cassettes, comprising cassette supports (32, 32a, 33, 33a) that can be moved in opposition according to the dimensions of the tool-carrier cassettes (12, 25, 25a, 57), the said cassette supports (32, 32a, 33, 33a) being fitted with devices (51) for attaching in position the cassette supports (32, 32a, 33, 33a) and devices (52) for locking the tool-carrier cassettes (12, 25, 25a, 57).

2. Transformation station (5, 6, 7, 8) according to Claim 1, **characterized in that** the slides (28, 28a, 29, 29a, 30, 30a, 31, 31a) are arranged on the upper portion of each of the side frames (16, 17, 26, 26a, 27, 27a).

3. Transformation station (5, 6, 7, 8) according to Claim 1, **characterized in that** the cassette supports (32, 32a, 33, 33a) comprise, each on their lower portion, racks (34, 34a, 35, 35a) meshing with pinions (36, 36a, 37, 37a) mounted on shafts (38, 38a, 39, 39a) driven by reduction gear motors (46, 47).

4. Transformation station (5, 6, 7, 8) according to Claim 3, **characterized in that** the shafts (38, 38a, 39, 39a) are supported in bearings (40, 41, 42, 43, respectively 40a, 41 a, 42a, 43a) arranged in the walls of the side frames (16, 17, 26, 26a, 27, 27a),

5. Transformation station (5, 6, 7, 8) according to Claim 4, **characterized in that** the shafts (38, 38a, 39, 39a) are fitted at their end with a pulse generator (50).

6. Transformation station (5, 6, 7, 8) according to Claim 1, **characterized in that** the devices (51) for attaching In position the cassette supports (32, 32a, 33, 33a) comprise two clamping members (53, 54) consisting of levers (58) articulated about shafts (59) arranged in bosses fixedly attached to the cassette supports (32, 32a, 33, 33a).

7. Transformation station (5, 6, 7, 8) according to Claim 6, **characterized in that** the levers (58) comprise, on their lower portion, a flat surface (60) designed to apply a clamping force against the slides (28, 28a, 29, 29a, 30, 30a, 31, 31 a) under the action of pneumatic cylinders (81) attached to each cassette support (32, 32a, 33, 33a).

8. Transformation station (5, 6, 7, 8) according to Claim 1, **characterized in that** the devices (52) for locking the tool-carrier cassettes (12, 25, 25a, 57) comprise a locking member (56) consisting of levers (70) articulated about shafts (71) arranged in bosses (72) fixedly attached to the cassette supports (32, 32a, 33, 33a).

9. Transformation station (5, 6, 7, 8) according to Claim 8, **characterized in that** the levers (70) comprise, on their lower portion, a bearing surface (73) for locking the cassettes (12, 25, 25a, 57) by pressing the upper portion of the lugs (74) of the said cassettes (12, 25, 25a, 57) under the effect of the pneumatic cylinders (75) attached to each cassette support (32, 32a, 33, 33a).

10. Transformation station (5, 6, 7, 8) according to Claim 9, **characterized in that** the levers (70) each comprise a locking notch (82) into which are engaged rollers (78) mounted on pivoting levers (79) articulated about pivots (80) arranged in the upper portion of the bosses (72) of the cassette supports (32, 32a, 33, 33a).

## Patentansprüche

1. Umformstation (5, 6, 7, 8) für eine Maschine zur Verpackungsherstellung, umfassend Seitenteile (16, 17, 26, 26a, 27, 27a), auf denen Gleitschienen (28, 28a, 29, 29a, 30, 30a, 31, 31a) angebracht sind, **dadurch gekennzeichnet, dass** Werkzeughalterkassetten (12, 25, 25a, 57) dazu bestimmt sind, zwischen den Seitenteilen (16, 17, 28, 26a, 27, 27a) angebracht zu werden, und **dadurch**, dass Organe für die Montage von Werkzeughalterkassetten über die Gleitschienen (28, 28a, 29, 29a, 30, 30a, 31, 31a) gleiten, umfassend Kassettenhalter (32, 32a, 33, 33a), die je nach den Abmessungen der Werkzeughalterkassetten (12, 25, 25a, 57) gegeneinander verschoben werden können, wobei die besagten Kassettenhalter (32, 32a, 33, 33a) mit Vorrichtungen zum Festhalten (51) der Kassettenhalter (32, 32a, 33, 33a) in der Position und mit Vorrichtungen zum Verriegeln (52) der Werkzeughalterkassetten (12, 25, 25a, 57) ausgestattet sind.

2. Umformstation (5, 6, 7, 8) nach Anspruch 1, **dadurch gekennzeichnet, dass** die Gleitschienen (28, 28a, 29, 29a, 30, 30a, 31, 31a) im oberen Abschnitt jedes der Seitengestelle (16, 17, 26, 26a, 27, 27a) angeordnet sind.

3. Umformstation (5, 6, 7, 8) nach Anspruch 1, **dadurch gekennzeichnet, dass** jeder der Kassettenhalter (32, 32a, 33, 33a) jeweils in seinem unteren Abschnitt Zahnstangen (34, 34a, 35, 35a) umfasst, die mit den Ritzeln (36, 36a, 37, 37a) zusammenwirken, die auf Wellen (38, 38a, 39, 39a) montiert sind, die von Getriebemotoren (46, 47) angetrieben werden.

4. Umformstation (5, 6, 7, 8) nach Anspruch 3, **dadurch gekennzeichnet, dass** die Wellen (38, 38a, 39, 39a) in Lagern (40, 41, 42, 43 bzw. 40a, 41a, 42a, 43a) gehalten werden, die in den Wänden der Seitenteile (16, 17, 26, 26a, 27, 27a) angeordnet sind.

5. Umformstation (5, 6, 7, 8) nach Anspruch 4, **dadurch gekennzeichnet, dass** die Wellen (38, 38a, 39, 39a) an ihrem Ende mit einem Impulsgenerator (50) ausgestattet sind.

6. Umformstation (5, 6, 7, 8) nach Anspruch 1, **dadurch gekennzeichnet, dass** die Vorrichtungen zum Festhalten (51) der Kassettenhalter (32, 32a, 33, 33a) in der Position zwei Klemmorgane (53, 54) umfassen, die durch Hebel (58) gebildet werden, die sich um Achsen (59) bewegen, die in Buckeln angeordnet sind, die fest mit den Kassettenhaltern (32, 32a, 33, 33a) verbunden sind.

7. Umformstation (5, 6, 7, 8) nach Anspruch 6, **dadurch gekennzeichnet, dass** die Hebel (58) in ihrem unteren Abschnitt eine ebene Fläche (60) umfassen, die dazu bestimmt ist, eine Klemmkraft gegen die Gleitschienen (28, 28a, 29, 29a, 30, 30a, 31, 31a) unter Einwirkung von Druckluftzylindern (61) auszuüben, die an jedem Kassettenhalter (32, 32a, 33, 33a) befestigt sind.

8. Umformstation (5, 6, 7, 8) nach Anspruch 1, **dadurch gekennzeichnet, dass** die Vorrichtungen zum Verriegeln (52) der Werkzeughalterkassetten (12, 25, 25a, 57) ein Verriegelungsorgan (56) umfassen, das sich aus Hebeln (70) zusammensetzt, die in Buckeln (72) angeordnet sind, die fest mit den Kassettenhaltern (32, 32a, 33, 33a) verbunden sind.

9. Umformstation (5, 6, 7, 8) nach Anspruch 8, **dadurch gekennzeichnet, dass** die Hebel (70) in ihrem unteren Abschnitt eine Auflagefläche (73) zum Verriegeln der Kassetten (12, 25, 25a, 57) durch das Andrücken des oberen Abschnitts der Zapfen (74) der besagten Kassetten (12, 25, 25a, 57) unter Einwirkung von Druckluftzylindern (75) umfassen, die auf jedem Kassettenhalter (32, 32a, 33, 33a) befestigt sind.

10. Umformstation (5, 6, 7, 8) nach Anspruch 9, **dadurch gekennzeichnet, dass** jeder der Hebel (70) eine Verriegelungsnut (82) umfasst, in die Kugelrollen (78) einrasten, die auf Schwenkhebeln (79) montiert sind, die sich um Drehzapfen (80) bewegen, die im oberen Abschnitt der Buckel (72) der Kassettenhalter (32, 32a, 33, 33a) angeordnet sind.
